# FASCICULE DE BREVET EUROPEEN

(11) **EP 3 162 712 B1**
(45) Date de publication et mention de la délivrance du brevet: **03.01.2018**
(21) Numéro de dépôt: 16192159.8
(22) Date de dépôt: 04.10.2016
(51) Int. Cl.: B64D 25/18, B64C 27/04, B64C 25/54

(54) **AERONEF MUNI D'UN SYSTEME DE FLOTTABILITE, ET PROCEDE DE FLOTTABILITE**
LUFTFAHRZEUG, DAS MIT EINER SCHWIMMVORRICHTUNG AUSGESTATTET IST SOWIE SCHWIMMVORRICHTUNG
AIRCRAFT PROVIDED WITH A FLOATATION SYSTEM, AND FLOATATION METHOD

(30) Priorité: 02.11.2015 FR 1502308
(43) Date de publication de la demande: 03.05.2017
(73) Titulaire: Airbus Helicopters, 13725 Marignane Cedex (FR)
(72) Inventeur: FERRIER, Jean-Jacques, 13880 VELAUX (FR)
(74) Mandataire: GPI & Associés

(56) Documents cités:
- CA-A1- 2 190 783
- JP-A- H08 192 797
- US-A1- 2005 077 426
- US-A1- 2015 217 862

## Description

La présente invention concerne un aéronef muni d'un système de flottabilité, ainsi qu'un procédé de flottabilité.

Dès lors, l'invention se situe dans le domaine technique des systèmes de flottabilité permettant l'amerrissage et la stabilité à flot d'un aéronef, et plus particulièrement un aéronef à voilure tournante.

Un tel système de flottabilité participe à la flottaison et à la stabilité d'un aéronef suite à un amerrissage. Le système de flottabilité peut être utilisé par exemple suite à un amerrissage forcé, pour permettre l'évacuation des occupants de cet aéronef. Tous les appareils voués aux missions de transport de personnes en zones maritimes sont équipés en principe d'un tel système de flottabilité.

Des règlements de certification précisent d'ailleurs qu'un aéronef doit pouvoir amerrir et être stable sur l'eau avec son système de flottabilité. La stabilité doit être avérée pour des états de surface libre de l'eau et de niveaux de vent qui sont définis dans ces règlements de certification.

Ces états de surface libre de l'eau sont aussi nommés « état de mer », et s'applique à toute surface liquide. Le terme « amerrissage » couvre aussi le posé d'un aéronef sur toute surface libre d'eau, que ce soit sur la mer ou sur un lac par exemple. Des règlements de certification requièrent la stabilité d'un aéronef avec un état de mer particulier.

Un système de flottabilité peut comprendre des flotteurs.

Les flotteurs sont fixés de part et d'autre d'une cellule de l'aéronef. Le terme « cellule » désigne une partie de l'aéronef logeant un poste de pilotage, voire une cabine et une soute.

Par exemple, des flotteurs sont fixés à un train d'atterrissage portant la cellule, ou encore à une paroi de la cellule.

Certains systèmes de flottaison comprennent des flotteurs gonflables dont le déploiement est commandé soit par le pilote et/ou le copilote par exemple, soit par un déclenchement automatique notamment grâce à un ou des détecteur(s) d'immersion. Ces flotteurs peuvent comprendre des outres gonflées par un moyen de déploiement.

Par ailleurs, les flotteurs peuvent être appariés pour optimiser la stabilité de l'aéronef sur l'eau. Dès lors, les flotteurs d'une paire peuvent être disposés de part et d'autre de la cellule de l'aéronef.

Le document US 2013/0327890 présente un aéronef muni de multiples flotteurs.

Un hélicoptère connu est par ailleurs muni d'un système de flottaison comprenant deux paires de flotteurs, chaque flotteur étant relié à la cellule par des ralingues. Les flotteurs sont des flotteurs gonflables gonflés avant l'amerrissage en mettant en oeuvre des bouteilles d'azote.

Un tel système de flottaison donne satisfaction pour assurer la stabilité de l'aéronef avec un état de mer de niveau 4 notamment.

Cependant, sur une mer extrêmement agitée présentant un état de mer très supérieur à l'état de mer requis par les règlements de certification ou sous l'action d'une vague présentant une intensité élevée, des flotteurs peuvent s'enfoncer sous la surface liquide lorsque l'aéronef présente un angle de roulis très important.

Si le centre de gravité de l'aéronef ne se trouve plus au droit d'un espace séparant deux flotteurs d'une paire de flotteurs, l'aéronef peut chavirer.

Pour limiter les risques de chavirement, les flotteurs peuvent être reliés à une cellule par un moyen élastique. Le document US 2015/0217862 présente un aéronef de ce type.

Par ailleurs, le document FR 2959725 présente un procédé de commande pour commander un système de flottabilité pour aéronef comportant des moyens de déclenchement manuel et des moyens de déclenchement automatique dudit système de flottabilité. Ce procédé consiste à prendre en compte au moins un paramètre d'attitude de l'aéronef pour piloter les moyens de déclenchement automatique. Le document US 2005/0077426 présente un aéronef comportant des flotteurs extérieurs. Les documents CA 2190183 et JP H08 192797 sont aussi connus.

La présente invention a alors pour objet de proposer un aéronef présentant une stabilité optimisée suite à un amerrissage.

L'invention présente donc un aéronef muni d'une cellule qui s'étend longitudinalement le long d'un plan antéropostérieur, cette cellule s'étendant transversalement d'un flanc gauche vers un flanc droit et en élévation d'une partie inférieure vers une partie supérieure.

Par exemple, la partie supérieure et la partie inférieure présentent une hauteur maximale sensiblement équivalente.

La cellule délimite au moins un espace interne s'étendant en élévation et de bas en haut d'un plancher vers un plafond. L'aéronef comprend un système de flottabilité, le système de flottabilité étant pourvu d'au moins deux flotteurs dits « flotteurs extérieurs » agencés à l'extérieur de la cellule, deux flotteurs extérieurs distincts étant disposés transversalement de part et d'autre du plan antéropostérieur.

De plus, le système de flottabilité possède au moins un flotteur dit « flotteur intérieur » agencé dans un espace interne dit « espace de flottabilité ». Chaque flotteur intérieur est disposé au dessus d'un plan transversal qui est perpendiculaire au plan antéropostérieur et qui traverse deux flotteurs extérieurs disposés de part et d'autre de la cellule. Chaque flotteur intérieur est par exemple porté par un support agencé dans la partie supérieure, tel qu'un plafond.

L'expression « qui traverse » signifie que les flotteurs extérieurs concernés sont intersectés par le plan transversal.

Le plan transversal peut passer par le centre de gravité d'au moins un flotteur extérieur.

L'expression « espace de flottabilité » désigne un tronçon de l'espace interne accueillant un flotteur intérieur.

Par conséquent, l'aéronef comprend des flotteurs disposés à l'extérieur de la cellule. Ces flotteurs sont dénommés « flotteurs extérieurs » par commodité en raison de leur localisation.

En outre, l'aéronef comporte au moins un flotteur disposé à l'intérieur de la cellule. Chaque flotteur de ce type est dénommé « flotteur intérieur » par commodité en raison de sa localisation.

Par suite, l'aéronef comporte a minima deux flotteurs extérieurs disposés de part et d'autre de la cellule, et un flotteur intérieur disposé dans la cellule.

De plus, chaque flotteur intérieur est disposé au dessus d'un plan transversal traversant les flotteurs extérieurs, lorsque l'aéronef possède un angle de roulis nul. Par exemple, les flotteurs extérieurs sont disposés au niveau de la partie inférieure de la cellule et notamment sensiblement au niveau du plancher d'un espace interne, alors que chaque flotteur intérieur se trouve par construction dans la partie supérieure.

Dès lors dans une coupe transversale, deux flotteurs extérieurs et un flotteur intérieur représentent approximativement les sommets d'un triangle. Par exemple, les centres de gravité de deux flotteurs extérieurs et d'un flotteur intérieur représentent les sommets d'un triangle.

Par suite, si l'aéronef se retourne en raison d'un état de mer particulièrement sévère ou d'une vague particulièrement violente, un flotteur extérieur se trouve en dehors de l'eau. Par contre, un autre flotteur extérieur et le flotteur intérieur peuvent maintenir l'aéronef à flot, en ménageant une zone non immergée dans l'aéronef.

En outre, l'agencement d'un flotteur intérieur dans la cellule présente l'avantage de protéger le flotteur intérieur lors de l'amerrissage. Ce flotteur intérieur est à l'abri au sein de la cellule ce qui tend à réduire les risques d'endommagement du flotteur intérieur lors de l'impact de l'aéronef avec l'eau.

De plus, si un flotteur extérieur est dégradé, ce flotteur intérieur peut alors éventuellement palier la rupture accidentelle d'un flotteur extérieur.

L'aéronef peut de plus comporter une ou plusieurs des caractéristiques qui suivent

Ainsi, chaque flotteur intérieur peut s'étendre longitudinalement sur une longueur maximale ainsi que transversalement sur une largeur maximale et en élévation sur une hauteur maximale, ladite longueur maximale étant supérieure à la hauteur maximale, ladite longueur maximale étant supérieure à la largeur maximale.

Par conséquent, le flotteur intérieur s'étend longitudinalement dans l'espace de flottabilité.

En outre, un espace de flottabilité s'étendant longitudinalement sur une longueur totale, un flotteur intérieur peut s'étendre longitudinalement sur une longueur maximale égale à cette longueur totale.

Le flotteur intérieur s'étend alors longitudinalement sur toute la longueur de l'espace de flottabilité.

Par ailleurs, au moins un flotteur intérieur peut être suspendu à un plafond.

Cette caractéristique permet de positionner le flotteur dans la partie supérieure de la cellule.

Selon un autre aspect, un espace de flottabilité est à choisir dans une liste comprenant une cabine ainsi qu'un poste de pilotage et une soute.

Le terme « poste de pilotage » désigne un tronçon de la cellule dans laquelle se trouvent le pilote et les instruments de pilotage de l'aéronef. Le terme « cabine » désigne un tronçon de la cellule dans laquelle se trouvent des passagers. Le terme « soute » désigne un tronçon de la cellule dans laquelle se trouve du frêt, tel que des bagages par exemple.

Ainsi, une cabine et/ou une soute et/ou un poste de pilotage peuvent chacun accueillir au moins un flotteur intérieur.

Par ailleurs, un espace de flottabilité comprenant un couloir disposé entre deux rangées de sièges, au moins un flotteur intérieur est agencé au dessus de ce couloir.

En particulier, la cabine de l'aéronef peut comprendre un couloir central. Au moins un flotteur intérieur peut alors être logé au dessus de ce couloir, entre deux habillages de plafond par exemple.

Cet agencement vise à faciliter l'évacuation des passagers en ne positionnant pas les flotteurs intérieurs au dessus de la tête des passagers.

En outre, au moins un des flotteurs peut être gonflable, le système de flottabilité étant muni d'un système de gonflage pour gonfler chaque flotteur gonflable, le système de flottabilité ayant un système de commande pour donner un ordre de gonflage de chaque flotteur gonflable au système de gonflage.

Par exemple, chaque flotteur est gonflable.

Le système de gonflage peut comporter un ou plusieurs gonfleurs électriques, chimiques, pyrotechniques, pneumatiques... Chaque gonfleur est alors relié à au moins un flotteur.

Le système de commande peut comprendre des moyens d'activation manuels de type bouton, voire des calculateurs déterminant si des conditions de gonflage sont réunies. Par exemple, un calculateur est relié à au moins un capteur d'immersion pour détecter si l'aéronef a amerri, et/ou à au moins un bouton pour détecter si un pilote requiert le gonflage d'au moins un flotteur.

L'utilisation de flotteurs gonflables permet d'optimiser le fonctionnement de l'aéronef en ne gonflant pas les flotteurs lorsque ces flotteurs ne sont pas utiles.

Lorsqu'au moins un flotteur extérieur et au moins un flotteur intérieur sont gonflables, le système de commande peut comporter un dispositif de commande extérieur dédié au gonflage de chaque flotteur extérieur gonflable et un dispositif de commande intérieur dédié au gonflage de chaque flotteur intérieur gonflable.

Les flotteurs intérieurs peuvent être gonflés indépendamment des flotteurs extérieurs.

Par exemple, les flotteurs extérieurs sont systématiquement gonflés si un amerrissage se produit. Par contre, les flotteurs intérieurs peuvent n'être gonflés que lors d'un retournement afin de ne pas gêner l'évacuation des occupants de l'aéronef en l'absence de retournement.

Lorsqu'au moins un flotteur intérieur est gonflable, le dispositif de commande intérieur peut comporter un moyen de mesure qui mesure un angle de roulis de l'aéronef, le dispositif de commande intérieur ayant une unité de traitement reliée au moyen de mesure pour gonfler chaque flotteur intérieur gonflable lorsque l'aéronef atteint un angle de roulis supérieur ou égal à un seuil.

Ainsi, l'unité de traitement peut comporter un processeur ou équivalent. Le moyen de mesure peut posséder un inclinomètre ou une centrale inertielle comprenant au moins trois gyromètres et au moins trois accéléromètres. L'unité de traitement est en outre reliée à au moins un gonfleur en communication avec des flotteurs intérieurs.

Par contre, le dispositif de commande extérieur peut comprendre des organes pour déterminer si un amerrissage va se produire ou si un amerrissage s'est produit. Selon l'exemple précédent, le dispositif de commande extérieur comporte au moins un capteur d'immersion apte à générer un signal de commande transmis à au moins un gonfleur en communication avec des flotteurs extérieurs.

Dès lors, suite à un amerrissage, au moins un capteur d'immersion détecte la présence d'eau, et induit le gonflage des flotteurs extérieurs.

En parallèle, l'unité de traitement détermine si l'angle de roulis courant atteint un seuil, et commande dans l'affirmative le système de gonflage pour gonfler les flotteurs intérieurs. Ce seuil est déterminé par le constructeur en fonction de la position des flotteurs notamment.

Par ailleurs, le système de flottabilité peut comporter au moins un siège présentant un volume étanche rempli au moins partiellement de gaz.

Par exemple, un volume étanche est ménagé sous une assise d'un siège ou dans des mousses d'habillage du siège. Chaque volume étanche peut participer au maintien de l'aéronef à flot.

Outre un aéronef, l'invention vise un procédé de flottabilité pour faire flotter un aéronef muni d'une cellule qui s'étend longitudinalement le long d'un plan antéropostérieur, la cellule s'étendant transversalement d'un flanc gauche vers un flanc droit et en élévation d'une partie inférieure vers une partie supérieure, la cellule délimitant au moins un espace interne s'étendant en élévation d'un plancher vers un plafond, l'aéronef comprenant un système de flottabilité, le système de flottabilité étant pourvu de deux flotteurs dits « flotteurs extérieurs » agencés à l'extérieur de la cellule, deux flotteurs extérieurs distincts étant disposés transversalement de part et d'autre du plan antéropostérieur à l'extérieur de la cellule.

Ce procédé comporte une étape de disposition d'au moins un flotteur dit « flotteur intérieur » dans un espace interne dit « espace de flottabilité », chaque flotteur intérieur étant disposé au dessus d'un plan transversal qui est perpendiculaire au plan antéropostérieur et qui traverse deux flotteurs extérieurs disposés de part et d'autre de la cellule.

Eventuellement, chaque flotteur extérieur est gonflé suite à un amerrissage, au moins un flotteur intérieur étant gonflé uniquement lorsque l'aéronef atteint un angle de roulis supérieur ou égal à un seuil.

Selon une autre variante, tous les flotteurs sont gonflés en même temps, avant ou après l'amerrissage en appliquant des procédés usuels.

L'invention et ses avantages apparaîtront avec plus de détails dans le cadre de la description qui suit avec des exemples donnés à titre illustratif en référence aux figures annexées qui représentent :
- la figure 1, un schéma présentant un aéronef muni d'un système de flottabilité selon l'invention,
- la figure 2, une coupe transversale schématique de cet aéronef,
- la figure 3, une coupe longitudinale schématique de cet aéronef, et
- les figures 4 à 7, des schémas explicitant le fonctionnement de l'invention.

On note que trois directions X, Y et Z orthogonales les unes par rapport aux autres sont représentées sur les figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

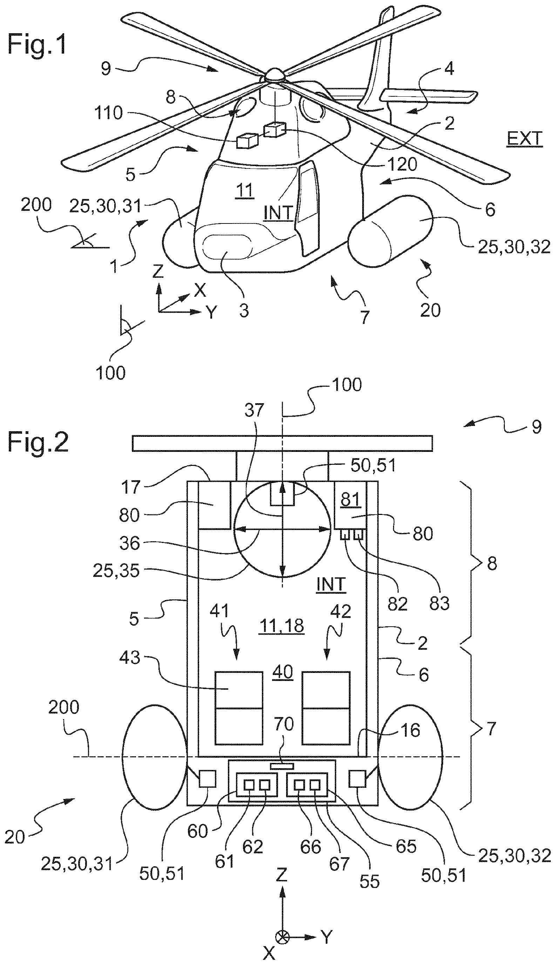

La figure 1 présente un aéronef 1 muni d'un système de flottabilité 20 selon l'invention. Cet aéronef peut notamment être un giravion.

Cet aéronef 1 comprend une cellule 2 s'étendant longitudinalement d'une extrémité avant 3 vers une extrémité arrière 4 le long d'un plan antéropostérieur 100. De plus, la cellule 2 s'étend transversalement d'un flanc gauche 5 vers un flanc droit 6 de part et d'autre du plan antéropostérieur 100, et en élévation d'une partie inférieure 7 vers une partie supérieure 8. Eventuellement, le plan antéropostérieur est un plan de symétrie de l'aéronef.

La partie inférieure comporte un fond de la cellule alors que la partie supérieure comporte le sommet de la cellule. La partie inférieure est classiquement munie d'un train d'atterrissage, alors que la partie supérieure peut porter un rotor 9 participant à la sustentation voire à la propulsion de l'aéronef. La partie inférieure peut inclure une barque délimitée notamment par le plancher d'un espace interne et l'enveloppe extérieure de la cellule.

La partie supérieure peut donc porter un rotor 9 dans le cadre d'un giravion. Ce rotor 9 est mis en rotation par au moins un moteur 110 au travers d'une boîte de transmission de puissance 120. Ce moteur 110 peut être un turbomoteur muni d'une turbine de détente solidaire d'un arbre de travail, l'arbre de travail étant relié par une chaîne mécanique à la boîte de transmission de puissance 120.

La partie inférieure peut alors représenter la moitié inférieure de la cellule alors que la partie supérieure représente la moitié supérieure de cette cellule.

Par ailleurs, l'intérieur INT de la cellule 2 comporte des espaces internes 11 creux qui sont délimités par l'enveloppe extérieure et diverses cloisons. Chaque espace interne 11 représente alors un compartiment qui s'étend notamment en élévation d'une base dite « plancher » par commodité vers un plafond. Eventuellement, le plafond d'un compartiment peut représenter le plancher d'un autre compartiment.

En outre, cet aéronef 1 est de plus pourvu d'un système de flottabilité 20 selon l'invention afin de pouvoir amerrir.

Un tel système de flottabilité 20 est pourvu d'au moins trois flotteurs 25. Chaque flotteur peut comprendre une enveloppe qui flotte sur l'eau, cette enveloppe emprisonnant un gaz par exemple.

En particulier, le système de flottabilité 20 est pourvu d'au moins deux flotteurs 25 dits « flotteurs extérieurs 30 » agencés de part et d'autre de la cellule 2 de l'aéronef. Chaque flotteur extérieur 30 est disposé à l'extérieur EXT de la cellule 2. L'expression « disposé à l'extérieur EXT de la cellule 2 » signifie que les flotteurs sont au moins partiellement déployés en dehors de la cellule 2 suite à un amerrissage.

Les flotteurs extérieurs 30 peuvent être fixés de manière usuelle à la cellule 2 et/ou à un train d'atterrissage par exemple. Ces flotteurs extérieurs peuvent être des flotteurs structuraux ou encore des flotteurs gonflables.

Ainsi, un flotteur extérieur 30 dit « flotteur extérieur gauche 31 » est disposé du côté du flanc gauche 5 de l'aéronef, alors qu'un flotteur extérieur 30 dit « flotteur extérieur droit 32» est disposé du côté du flanc droit 6 de l'aéronef.

Les flotteurs extérieurs 30 peuvent être appariés. Dès lors, les flotteurs extérieurs 30 d'une paire peuvent être disposés symétriquement de part et d'autre du plan antéropostérieur 100 de symétrie de l'aéronef dans une position stable de l'aéronef.

Par exemple, l'aéronef comporte une voire deux paires de flotteurs extérieurs 30.

Au moins une paire de flotteurs extérieurs 30 peut être agencée au niveau de la partie inférieure 7 de la cellule. Dès lors, chaque flotteur extérieur est intersecté par un plan transversal 200 perpendiculaire au plan antéropostérieur. Le plan antéropostérieur 100 pouvant être qualifié de plan vertical en raison de son inclinaison sensiblement selon la pesanteur lorsque l'aéronef a une assiette nulle, le plan transversal 200 peut être qualifié de plan horizontal.

Par exemple, chaque flotteur extérieur 30 est positionné à proximité de la barque d'un aéronef pour maintenir l'aéronef à flot.

En référence à la figure 2, le système de flottabilité 20 comporte en outre moins un flotteur 25 dit « flotteur intérieur 35 ».

Chaque flotteur intérieur 35 est agencé à l'intérieur INT de la cellule 2, par opposition aux flotteurs extérieurs qui se trouvent à l'extérieur de la cellule.

Ainsi, chaque flotteur intérieur 35 est disposé dans un espace interne 11 dénommé « espace de flottabilité 18 » par commodité. Chaque flotteur intérieur 35 est porté par un support de cet espace de flottabilité 18, en étant par exemple suspendu à un plafond 17 de cet espace de flottabilité 18 voire étant agencé en dessous de ce plafond. Indépendamment de la variante, le flotteur intérieur est agencé dans la partie supérieure de l'aéronef.

Par suite, chaque flotteur intérieur 35 est agencé au niveau de la partie supérieure 8 de la cellule, contrairement aux flotteurs extérieurs qui se trouvent au niveau de la partie inférieure 7 de la cellule 2. Lorsque l'assiette de l'aéronef est nulle, chaque flotteur intérieur 35 est donc disposé au dessus du plan transversal 200 horizontal qui est perpendiculaire au plan antéropostérieur 100 et qui traverse deux flotteurs extérieurs 30 disposés de part et d'autre de la cellule 2. Le centre de gravité d'au moins un flotteur extérieur est par exemple contenu dans ce plan transversal 200.

A l'inverse, le centre de gravité d'un flotteur intérieur est présent dans un plan supérieur perpendiculaire au plan antéropostérieur 100. Ce plan supérieur surplombe le centre de gravité de chaque flotteur extérieur quand l'assiette de l'aéronef est nulle, à savoir quand l'angle de roulis et l'angle de tangage de l'aéronef sont nuls.

En outre, un espace de flottabilité 18 peut comporter un couloir 40 central séparant transversalement deux rangées 42, 43 de sièges 41. Un habillage de plafond 80 surplombe usuellement chaque rangée 42, 43 de sièges 41. Un tel habillage de plafond 80 peut comprendre des casiers de rangement 81, des moyens d'éclairage 82, des bouches de climatisation 83...

Dès lors, au moins un flotteur intérieur 35 peut être positionné entre les habillages de plafond 80, et donc au dessus du couloir 40.

L'expression « au dessus du couloir 40 » signifie que le flotteur intérieur 35 surplombe le plancher 16 délimitant partiellement en élévation le couloir.

Par ailleurs, au moins un flotteur intérieur 35 peut être gonflable.

Dès lors, au moins un flotteur extérieur 30 et/ou au moins un flotteur intérieur 35 sont gonflables. Eventuellement, tous les flotteurs 25 sont gonflables. Dès lors, les flotteurs gonflables sont dégonflés en dehors des phases d'amerrissage. Les flotteurs gonflables peuvent notamment être pliés dans une enveloppe prévue à cet effet.

Dans ces conditions, le système de flottabilité comprend un système de gonflage 50 pour gonfler chaque flotteur gonflable. Ce système de gonflage 50 comporte au moins un gonfleur 51 pour gonfler les flotteurs gonflables. Chaque gonfleur peut comporter un gonfleur électrique, explosif, pneumatique ou chimique ..

Par exemple mais non exclusivement, un gonfleur 51 est relié à une pluralité de flotteurs 25. La figure 2 illustre à l'inverse un système de gonflage 50 comprenant plusieurs gonfleurs 51. A titre illustratif, le système de gonflage 50 peut comprendre au moins un gonfleur 51 dédié aux flotteurs extérieurs 30 et au moins un gonfleur 51 dédié aux flotteurs intérieurs 35. Eventuellement, le système de gonflage comporte au moins un gonfleur 51 par flotteur.

On peut se référer à l'état de la technique pour trouver des exemples de réalisation des flotteurs gonfleurs et de systèmes de gonflage de ces flotteurs.

De plus, le système de flottabilité est pourvu d'au moins un système de commande 55 pour commander les gonfleurs 51. Ce système de commande 55 est alors relié à au moins un gonfleur 51 pour requérir le gonflage des flotteurs 25.

Le système de commande 55 peut être un système usuel.

Ce système de commande peut toutefois comporter un calculateur possédant par exemple un processeur, un circuit intégré, un système programmable, un circuit logique, ces exemples ne limitant pas la portée donnée au terme « calculateur ».

Ce calculateur peut être éventuellement armé par un moyen d'activation 70 manoeuvrable par un individu. Le moyen d'activation peut posséder au moins une position permettant de rendre actif le système de flottabilité. Ainsi, le système de flottabilité peut être inhibé dans certaines situations, par exemple lorsque l'aéronef ne survole pas une surface liquide.

La calculateur peut déterminer si des conditions de gonflage prédéterminées sont remplies, et peut activer le cas échéant les gonfleurs 51. Par exemple, un moyen de sélection commandable par un individu permet de transmettre au calculateur un ordre de gonflage des flotteurs extérieurs et/ou intérieurs. L'expression « moyen de sélection» peut désigner un bouton, un écran tactile, un moyen de commande vocal, un clavier ou un pointeur permettant de manipuler des moyens informatiques...

De même, au moins un capteur d'immersion peut permettre de détecter la présence d'eau, et transmet le cas échéant au calculateur un ordre de gonflage des flotteurs extérieurs et/ou intérieurs.

Selon une réalisation, le système de commande 55 peut comporter un dispositif de commande extérieur 65 dédié au gonflage de chaque flotteur extérieur 30 gonflable et un dispositif de commande intérieur 60 dédié au gonflage de chaque flotteur intérieur 35 gonflable.

Par exemple, le dispositif de commande extérieur 65 comporte au moins un capteur d'immersion 66 et/ou un moyen de sélection 67 commandable par un individu voire une unité de calcul déterminant si un amerrissage s'est produit par exemple en fonction de données de navigation.

Selon un exemple, chaque capteur d'immersion 66 et le moyen de sélection 67 ainsi qu'une centrale inertielle sont reliés à un calculateur, ce calculateur étant relié à chaque gonfleur.

De plus, le dispositif de commande intérieur 60 peut comporter un moyen de mesure 61 qui mesure un angle de roulis ROL de l'aéronef 1. Ce moyen de mesure 61 communique avec une unité de traitement 62 qui transmet un signal aux gonfleurs 51 pour gonfler chaque flotteur intérieur 35 gonflable lorsque l'aéronef 1 atteint un angle de roulis supérieur ou égal à un seuil.

L'unité de traitement peut posséder par exemple un processeur, un circuit intégré, un système programmable, un circuit logique, ces exemples ne limitant pas la portée donnée à l'expression « unité de traitement». L'unité de traitement et le calculateur précités peuvent représenter une seule et même unité électronique. Une telle unité électronique peut comporter au moins un processeur ou équivalent et une mémoire, des segments de code mémorisés dans la mémoire appartenant à l'unité de traitement et des segments de code mémorisés dans la mémoire appartenant au calculateur.

Dans ce contexte, le dispositif de commande extérieur 65 et le dispositif de commande intérieur 60 sont éventuellement indépendants, le gonflage des flotteurs intérieurs n'étant pas nécessairement requis lorsque le gonflage des flotteurs extérieurs est requis.

Par ailleurs, chaque flotteur intérieur s'étend transversalement sur une largeur maximale 36 et en élévation sur une hauteur maximale 37.

Le terme « maximal » permet de désigner la plus grande dimension d'un flotteur selon une direction donnée. Sur une forme circulaire du type de la figure 2, la largeur maximale 36 et la hauteur maximale 37 représentent alors des diamètres.

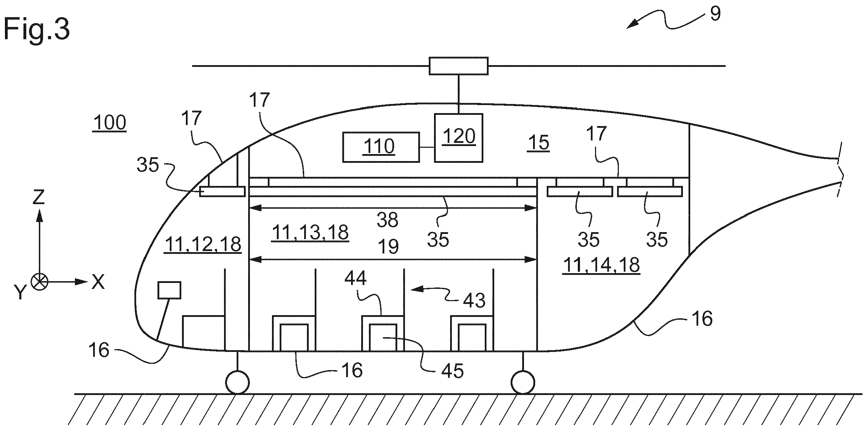

En référence à la figure 3, un flotteur intérieur s'étend en outre longitudinalement sur une longueur maximale 38. Eventuellement, la longueur maximale 38 est alors supérieure à la hauteur maximale 37, cette longueur maximale 38 étant aussi supérieure à la largeur maximale 36.

De plus, un espace de flottabilité 18 s'étendant longitudinalement sur une longueur totale 19, un flotteur intérieur 35 peut s'étendre longitudinalement sur une longueur maximale 38 égale à cette longueur totale 19.

Par ailleurs, la cellule peut comprendre divers espaces internes, tels qu'un poste de pilotage 12, une cabine 13, une soute 14, un compartiment moteur 15. Selon l'illustration de la figure 3, le plafond de la cabine 13 et de la soute 14 représente le plancher mécanique du compartiment moteur 15. Cette configuration est donnée à titre illustratif, d'autres agencements étant possibles.

Dès lors, la cabine 13 ainsi que le poste de pilotage 12 et la soute 14 peuvent chacun représenter un espace de flottabilité 18 équipé d'au moins un flotteur intérieur 30 au plafond.

Selon l'exemple de la figure 3, une cabine 13 représente un espace de flottabilité 18 comprenant au moins un flotteur intérieur s'étendant sur toute la longueur de cette cabine. Le poste de pilotage est aussi muni d'un tel flotteur intérieur. Par contre, la soute comporte au moins deux flotteurs intérieurs disposés l'un derrière l'autre ou encore transversalement l'un à côté de l'autre.

Les flotteurs intérieurs peuvent être disposés longitudinalement les uns derrière les autres.

Par ailleurs, le système de flottabilité peut comprendre des organes de flottaison complémentaires.

Ainsi, au moins un siège 43 peut présenter un volume étanche 45 rempli au moins partiellement de gaz.

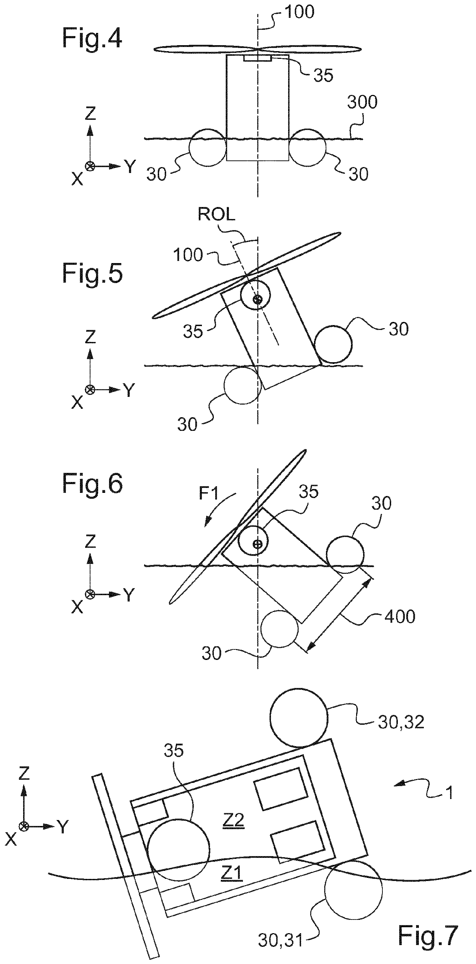

Les figures 4 à 7 illustrent le procédé mis en oeuvre par l'invention.

En référence à la figure 4, lorsqu'un aéronef 1 amerrit sur une surface liquide 300, les flotteurs extérieurs 30 sont déployés pour assurer au moins partiellement le maintien à flot de l'aéronef 1.

Dans le cadre de flotteurs gonflables, les flotteurs extérieurs peuvent être gonflés en vol préalablement à l'amerrissage, ou après l'amerrissage.

Par contre, les flotteurs intérieurs 35 peuvent être dégonflés pour ne pas entraver la circulation des personnes alors que ces flotteurs intérieurs ne sont pas nécessaires pour que l'aéronef flotte.

Si la mer est agitée et en référence à la figure 5, l'aéronef peut s'incliner en présentant un angle de roulis ROL.

Tant que cet angle de roulis ROL est inférieur à un seuil, les flotteurs intérieurs sont dégonflés. A l'inverse, les flotteurs intérieurs sont gonflés si l'angle de roulis ROL atteint un seuil prédéterminé.

En référence à la figure 6, si le centre de gravité CDG de l'aéronef ne surplombe plus l'espace 400 inter-flotteurs présent entre deux flotteurs extérieurs d'une paire de flotteurs, l'aéronef 1 peut se retourner selon la flèche F1.

En référence à la figure 7, au moins un flotteur extérieur 30 est alors hors de l'eau. Selon l'exemple de la figure 7, tous les flotteurs extérieurs 32 situés à droite de la cellule sont hors de l'eau.

Par contre, les flotteurs extérieurs 31 situés à gauche de la cellule et les flotteurs intérieurs 35 flottent. Par suite, une première zone Z1 d'un espace interne peut être sous l'eau, mais les flotteurs intérieurs permettent de maintenir une deuxième zone Z2 d'un espace interne hors de l'eau.

Selon une autre variante, les flotteurs intérieurs et les flotteurs extérieurs sont tous gonflés en cas d'amerrissage.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention comme défini dans les revendications suivantes.

## Revendications

1. Aéronef (1) muni d'une cellule (2) qui s'étend longitudinalement le long d'un plan antéropostérieur (100), ladite cellule (2) s'étendant transversalement d'un flanc gauche (5) vers un flanc droit (6) et en élévation d'une partie inférieure (7) vers une partie supérieure (8), ladite cellule (2) délimitant au moins un espace interne (11) s'étendant en élévation et de bas en haut d'un plancher (16) vers un plafond (17), ledit aéronef comprenant un système de flottabilité (20), le système de flottabilité (20) étant pourvu d'au moins deux flotteurs (25) dits « flotteurs extérieurs (30) » agencés à l'extérieur (EXT) de la cellule (2), deux flotteurs extérieurs (30) distincts étant disposés transversalement de part et d'autre dudit plan antéropostérieur (100)
**caractérisé en ce que** ledit système de flottabilité (20) possède au moins un flotteur (25) dit « flotteur intérieur (35) » agencé dans un espace interne (11) dit «espace de flottabilité (18) », chaque flotteur intérieur (35) étant disposé au dessus d'un plan transversal (200) qui est perpendiculaire au plan antéropostérieur (100) et qui traverse deux flotteurs extérieurs (30) disposés de part et d'autre de la cellule (2).

2. Aéronef selon la revendication 1,
**caractérisé en ce qu'**au moins un flotteur intérieur (35) est porté par un support agencé dans ladite partie supérieure.

3. Aéronef selon la revendication 2,
**caractérisé en ce qu'**un support est un plafond (17) d'un espace de flottabilité.

4. Aéronef selon l'une quelconque des revendications 1 à 3, **caractérisé en ce que** chaque flotteur intérieur (35) s'étend longitudinalement sur une longueur maximale (38) ainsi que transversalement sur une largeur maximale (36) et en élévation sur une hauteur maximale (37), ladite longueur maximale (38) étant supérieure à la hauteur maximale (37), ladite longueur maximale (38) étant supérieure à la largeur maximale (36).

5. Aéronef selon l'une quelconque des revendications 1 à 4,
**caractérisé en ce qu'**un espace de flottabilité (18) s'étendant longitudinalement sur une longueur totale (19), un flotteur intérieur (35) s'étend longitudinalement sur une longueur maximale (38) égale à cette longueur totale (19).

6. Aéronef selon la revendication 3,
**caractérisé en ce qu'**au moins un flotteur intérieur (35) est suspendu à un plafond (17).

7. Aéronef selon l'une quelconque des revendications 1 à 6,
**caractérisé en ce qu'**un espace de flottabilité (18) est à choisir dans une liste comprenant une cabine (13) ainsi qu'un poste de pilotage (12) et une soute (14).

8. Aéronef selon l'une quelconque des revendications 1 à 7,
**caractérisé en ce qu'**un espace de flottabilité (18) comprenant un couloir (40) disposé entre deux rangées (41, 42) de sièges (43), au moins un flotteur intérieur (35) est agencé au dessus de ce couloir (40).

9. Aéronef selon l'une quelconque des revendications 1 à 8,
**caractérisé en ce qu'**au moins un desdits flotteurs (25) est gonflable, le système de flottabilité (20) ayant un système de gonflage (50) pour gonfler chaque flotteur (25) gonflable, ledit système de flottabilité (20) ayant un système de commande (55) pour donner un ordre de gonflage de chaque flotteur (25) gonflable au système de gonflage (50).

10. Aéronef selon la revendication 9,
**caractérisé en ce que** chaque flotteur (25) est gonflable.

11. Aéronef selon l'une quelconque des revendications 9 à 10,
**caractérisé en ce que**, au moins un flotteur extérieur (30) et au moins un flotteur intérieur (35) étant gonflables, ledit système de commande (55) comporte un dispositif de commande extérieur (65) dédié au gonflage de chaque flotteur extérieur (30) gonflable et un dispositif de commande intérieur (60) dédié au gonflage de chaque flotteur intérieur (35) gonflable.

12. Aéronef selon la revendication 11,
**caractérisé en ce que**, au moins un flotteur intérieur (35) étant gonflable, ledit dispositif de commande intérieur (60) comporte un moyen de mesure (61) qui mesure un angle de roulis (ROL) de l'aéronef (1), ledit dispositif de commande intérieur (60) ayant une unité de traitement (62) reliée au moyen de mesure (61) pour gonfler chaque flotteur intérieur (35) gonflable lorsque l'aéronef (1) atteint un angle de roulis (ROL) supérieur ou égal à un seuil.

13. Aéronef selon l'une quelconque des revendications 1 à 12,
**caractérisé en ce que** ledit système de flottabilité (20) comporte au moins un siège (43) présentant un volume étanche (45) rempli au moins partiellement de gaz.

14. Procédé de flottabilité pour faire flotter un aéronef (1) muni d'une cellule (2) qui s'étend longitudinalement le long d'un plan antéropostérieur (100), ladite cellule (2) s'étendant transversalement d'un flanc gauche (5) vers un flanc droit (6) et en élévation d'une partie inférieure (7) vers une partie supérieure (8), ladite cellule (2) délimitant au moins un espace interne (11) s'étendant en élévation d'un plancher (16) vers un plafond (17), ledit aéronef (1) comprenant un système de flottabilité (20), le système de flottabilité (20) étant pourvu de deux flotteurs (25) dits « flotteurs extérieurs (30) » agencés à l'extérieur (EXT) de la cellule (2), deux flotteurs extérieurs (30) distincts étant disposés transversalement de part et d'autre dudit plan antéropostérieur (100) à l'extérieur (EXT) de la cellule (2),
**caractérisé en ce qu'**on dispose au moins un flotteur (25) dit « flotteur intérieur (35) » dans un espace interne (11) dit « espace de flottabilité (18) », chaque flotteur intérieur (35) étant disposé au dessus d'un plan transversal (200) qui est perpendiculaire au plan antéropostérieur (100) et qui traverse deux flotteurs extérieurs (30) disposés de part et d'autre de la cellule (2).

15. Procédé selon la revendication 14,
**caractérisé en ce que** chaque flotteur extérieur (30) est gonflé suite à un amerrissage, au moins un flotteur intérieur (35) étant gonflé uniquement lorsque l'aéronef (1) atteint un angle de roulis (ROL) supérieur ou égal à un seuil.

## Patentansprüche

1. Luftfahrzeug (1) mit einem Flugwerk (2), das sich in Längsrichtung entlang einer anteroposterioren Ebene (100) erstreckt, wobei das Flugwerk (2) sich in Querrichtung von einer linken Seite (5) zu einer rechten Seite (6) und in Höhenrichtung von einem unteren Teil (7) zu einem oberen Teil (8) erstreckt, wobei das Flugwerk (2) mindestens einen Innenraum (11) eingrenzt, der sich in Höhenrichtung von unten nach oben von einem Boden (16) zu einer Decke (17) erstreckt, wobei das Luftfahrzeug eine Schwimmvorrichtung (20) aufweist, wobei die Schwimmvorrichtung (20) mit mindestens zwei "äußere Schwimmer (30)" genannten Schwimmern (25) versehen ist, die außen (EXT) am Flugwerk (2) angebracht sind, wobei zwei verschiedene äußere Schwimmer (30) in Querrichtung zu beiden Seiten der anteroposterioren Ebene (100) angeordnet sind,
**dadurch gekennzeichnet, dass** die Schwimmvorrichtung (20) mindestens einen "innerer Schwimmer (35)" genannten Schwimmer (25) aufweist, der in einem "Schwimmraum (18)" genannten Innenraum (11) angeordnet ist, wobei jeder innere Schwimmer (35) oberhalb einer quer verlaufenden Ebene (200) angeordnet ist, die senkrecht zu der anteroposterioren Ebene (100) verläuft und die zwei äußere Schwimmer (30) durchquert, die zu beiden Seiten des Flugwerks (2) angeordnet sind.

2. Luftfahrzeug nach Anspruch 1,
**dadurch gekennzeichnet, dass** mindestens ein innerer Schwimmer (35) von einem Träger getragen wird, der in dem oberen Teil angeordnet ist.

3. Luftfahrzeug nach Anspruch 2,
**dadurch gekennzeichnet, dass** ein Träger eine Decke (17) eines Schwimmraums ist.

4. Luftfahrzeug nach einem der Ansprüche 1 bis 3,
**dadurch gekennzeichnet, dass** jeder innere Schwimmer (35) sich in Längsrichtung auf einer maximalen Länge (38) sowie in Querrichtung über eine maximale Breite (36) und in Höhenrichtung über eine maximale Höhe (37) erstreckt, wobei die maximale Länge (38) größer ist als die maximale Höhe (37), wobei die maximale Länge (38) größer ist als die maximale Breite (36).

5. Luftfahrzeug nach einem der Ansprüche 1 bis 4,
**dadurch gekennzeichnet, dass** der Schwimmraum (18) sich in Längsrichtung über eine Gesamtlänge (19) erstreckt, wobei ein innerer Schwimmer (35) sich in Längsrichtung über eine maximale Länge (38) erstreckt, die gleich dieser Gesamtlänge (19) ist.

6. Luftfahrzeug nach Anspruch 3,
**dadurch gekennzeichnet, dass** mindestens ein innerer Schwimmer (35) an einer Decke (17) aufgehängt ist.

7. Luftfahrzeug nach einem der Ansprüche 1 bis 6,
**dadurch gekennzeichnet, dass** ein Schwimmraum (18) auszuwählen ist aus einer Liste, die eine Kabine (13) sowie ein Cockpit (12) und einen Laderaum (14) umfasst.

8. Luftfahrzeug nach einem der Ansprüche 1 bis 7,
**dadurch gekennzeichnet, dass** der Schwimmraum (18) einen Gang (40) aufweist, der zwischen zwei Reihen (41, 42) von Sitzen (43) angeordnet ist, wobei mindestens ein innerer Schwimmer (35) oberhalb dieses Gangs (40) angeordnet ist.

9. Luftfahrzeug nach einem der Ansprüche 1 bis 8,
**dadurch gekennzeichnet, dass** mindestens einer der Schwimmer (25) aufblasbar ist, wobei die Schwimmvorrichtung (20) eine Aufblasvorrichtung (50) zum Aufblasen eines jeden aufblasbaren Schwimmers (25) aufweist, wobei die Schwimmvorrichtung (20) ein Steuerungssystem (55) aufweist, um der Aufblasvorrichtung (50) den Befehl zum Aufblasen eines jeden Schwimmers (25) zu erteilen.

10. Luftfahrzeug nach Anspruch 9,
**dadurch gekennzeichnet, dass** jeder Schwimmer (25) aufblasbar ist.

11. Luftfahrzeug nach einem der Ansprüche 9 bis 10,
**dadurch gekennzeichnet, dass** mindestens ein äußerer Schwimmer (30) und mindestens ein innerer Schwimmer (35) aufblasbar sind, wobei das Steuerungssystem (55) eine äußere Steuervorrichtung (65) aufweist zum Aufblasen eines jeden aufblasbaren äußeren Schwimmers (30) und eine innere Steuervorrichtung (60) zum Aufblasen eines jeden aufblasbaren inneren Schwimmers (35).

12. Luftfahrzeug nach Anspruch 11,
**dadurch gekennzeichnet, dass** mindestens ein innerer Schwimmer (35) aufblasbar ist, wobei die innere Steuervorrichtung (60) ein Messgerät (61) aufweist, welches einen Gierwinkel (ROL) des Luftfahrzeugs (1) misst, wobei die innere Steuervorrichtung (60) eine Bearbeitungseinheit (62) aufweist, die mit dem Messapparat (61) verbunden ist, um jeden aufblasbaren inneren Schwimmer (35) aufzublasen, wenn das Luftfahrzeug (1) einen Gierwinkel (ROL) einnimmt, der größer oder gleich einem Schwellenwert ist.

13. Luftfahrzeug nach einem der Ansprüche 1 bis 12,
**dadurch gekennzeichnet, dass** die Schwimmvorrichtung (20) mindestens einen Sitz (43) aufweist mit einem dichten Volumen (45), das mindestens teilweise mit Gas gefüllt ist.

14. Verfahren zum Schwimmfähigmachen eines Luftfahrzeugs (1), um dieses schwimmen zu lassen, wobei das Luftfahrzeug (1) mit einem Flugwerk (2) versehen ist, das sich in Längsrichtung entlang einer anteroposterioren Ebene (100) erstreckt, wobei das Flugwerk (2) sich in Querrichtung von einer linken Seite (5) zu einer rechten Seite (6) und in Höhenrichtung von einem unteren Teil (7) zu einem oberen Teil (8) erstreckt, wobei das Flugwerk (2) mindestens einen Innenraum (11) eingrenzt, der sich in Höhenrichtung von einem Boden (16) zu einer Decke (17) erstreckt, wobei das Luftfahrzeug (1) eine Schwimmvorrichtung (20) aufweist, wobei die Schwimmvorrichtung (20) mit zwei "äußere Schwimmer (30)" genannten Schwimmern (25) versehen ist, die außen (EXT) am Flugwerk (2) angebracht sind, wobei zwei verschiedene äußere Schwimmer (30) in Querrichtung zu beiden Seiten der anteroposterioren Ebene (100) außen (EXT) am Flugwerk (2) angeordnet sind,
**dadurch gekennzeichnet, dass** mindestens ein "innerer Schwimmer (35)" genannter Schwimmer (25) in einem "Schwimmraum (18)" genannten Innenraum (11) angeordnet ist, wobei jeder innere Schwimmer (35) oberhalb einer quer verlaufenden Ebene (200) angeordnet ist, die senkrecht zu der anteroposterioren Ebene (100) verläuft und die zwei äußere Schwimmer (30) durchquert, die zu beiden Seiten des Flugwerks (2) angeordnet sind.

15. Verfahren nach Anspruch 14,
**dadurch gekennzeichnet, dass** jeder äußere Schwimmer (30) nach einer Wasserlandung aufgeblasen wird, wobei mindestens ein innerer Schwimmer (35) nur dann aufgeblasen wird, wenn das Luftfahrzeug (1) einen Gierwinkel (ROL) erreicht, der größer oder gleich einem Schwellenwert ist.

## Claims

1. Aircraft (1) provided with an airframe (2) which extends longitudinally along an anteroposterior plane (100), said airframe (2) extending transversely from a left flank (5) towards a right flank (6) and in elevation from a lower part (7) towards an upper part (8), said airframe (2) delimiting at least one internal space (11) extending in elevation and from bottom to top from a floor (16) towards a ceiling (17), said aircraft comprising a floatation system (20), the floatation system (20) being provided with at least two floats (25) called "exterior floats (30)" arranged on the exterior (EXT) of the airframe (2), two distinct exterior floats (30) being disposed transversely on one side and on the other side of said anteroposterior plane (100)
**characterised in that** said floatation system (20) possesses at least one float (25) called "interior float (35)" arranged in an internal space (11) called "floatation space (18)", each interior float (35) being disposed above a transverse plane (200) which is perpendicular to the anteroposterior plane (100) and which passes through two exterior floats (30) disposed on one side and on the other side of the airframe (2) .

2. Aircraft according to claim 1,
**characterised in that** at least one interior float (35) is carried by a support arranged in said upper part.

3. Aircraft according to claim 2,
**characterised in that** a support is a ceiling (17) of a floatation space.

4. Aircraft according to any one of claims 1 to 3,
**characterised in that** each interior float (35) extends longitudinally over a maximum length (38) as well as transversely over a maximum width (36) and in elevation over a maximum height (37), said maximum length (38) being greater than the maximum height (37), said maximum length (38) being greater than the maximum width (36).

5. Aircraft according to any one of claims 1 to 4,
**characterised in that** a flotation space (18) extending longitudinally over a total length (19), an interior float (35) extends longitudinally over a maximum length (38) equal to this total length (19).

6. Aircraft according to claim 3,
**characterised in that** at least one interior float (35) is suspended from a ceiling (17).

7. Aircraft according to any one of claims 1 to 6,
**characterised in that** a flotation space (18) is to be chosen from a list comprising a cabin (13) as well as a cockpit (12) and a hold (14).

8. Aircraft according to any one of claims 1 to 7,
**characterised in that** a flotation space (18) comprising an aisle (40) disposed between two rows (41, 42) of seats (43), at least one interior float (35) is arranged above this aisle (40) .

9. Aircraft according to any one of claims 1 to 8,
**characterised in that** at least one of said floats (25) is inflatable, the flotation system (20) having an inflation system (50) for inflating each inflatable float (25), said floatation system (20) having a control system (55) for giving an order to inflate each inflatable float (25) to the inflation system (50).

10. Aircraft according to claim 9,
**characterised in that** each float (25) is inflatable.

11. Aircraft according to any one of claims 9 to 10,
**characterised in that**, at least one exterior float (30) and at least one interior float (35) being inflatable, said control system (55) comprises an exterior control device (65) dedicated to inflating each inflatable exterior float (30) and an interior control device (60) dedicated to inflating each inflatable interior float (35).

12. Aircraft according to claim 11,
**characterised in that**, at least one interior float (35) being inflatable, said interior control device (60) comprises a measuring means (61) which measures a roll angle (ROL) of the aircraft (1), said interior control device (60) having a processing unit (62) connected to the measuring means (61) for inflating each inflatable interior float (35) when the aircraft (1) reaches a roll angle (ROL) greater than or equal to a threshold.

13. Aircraft according to any one of claims 1 to 12,
**characterised in that** said floatation system (20) comprises at least one seat (43) having a sealed volume (45) filled at least partially with gas.

14. Floatation method for floating an aircraft (1) provided with an airframe (2) which extends longitudinally along an anteroposterior plane (100), said airframe (2) extending transversely from a left flank (5) towards a right flank (6) and in elevation from a lower part (7) towards an upper part (8), said airframe (2) delimiting at least one internal space (11) extending in elevation from a floor (16) towards a ceiling (17), said aircraft (1) comprising a floatation system (20), the floatation system (20) being provided with two floats (25) called "exterior floats (30)" arranged on the exterior (EXT) of the airframe (2), two distinct exterior floats (30) being disposed transversely on one side and on the other side of said anteroposterior plane (100) on the exterior (EXT) of the airframe (2),
**characterised in that** said at least one float (25) called "interior float (35)" is disposed in an internal space (11) called "floatation space (18)", each interior float (35) being disposed above a transverse plane (200) which is perpendicular to the anteroposterior plane (100) and which passes through two exterior floats (30) disposed on one side and on the other side of the airframe (2).

15. Method according to claim 14,
**characterised in that** each exterior float (30) is inflated following a water landing, at least one interior float (35) being inflated only when the aircraft (1) reaches a roll angle (ROL) greater than or equal to a threshold.
